Europäisches Patentamt

European Patent Office

Office européen des brevets

(19)

(11) **EP 1 168 855 A1**

(12) ## DEMANDE DE BREVET EUROPEEN

(43) Date de publication:
    **02.01.2002 Bulletin 2002/01**

(51) Int Cl.⁷: **H04Q 1/46**

(21) Numéro de dépôt: **01401418.7**

(22) Date de dépôt: **31.05.2001**

(84) Etats contractants désignés:
    **AT BE CH CY DE DK ES FI FR GB GR IE IT LI LU MC NL PT SE TR**
    Etats d'extension désignés:
    **AL LT LV MK RO SI**

(30) Priorité: **22.06.2000 FR 0008014**

(71) Demandeur: **ALCATEL**
    **75008 Paris (FR)**

(72) Inventeur: **Charbin, Baptistine**
    **92120 Montrouge (FR)**

(74) Mandataire: **Sciaux, Edmond et al**
    **COMPAGNIE FINANCIERE ALCATEL Dépt.**
    **Propr. Industrielle, 30, avenue Kléber**
    **75116 Paris (FR)**

(54) **Procédé pour la détection d'une fréquence ou d'une combinaison de fréquences dans un signal et matériels de télécommunications mettant en oeuvre ce procédé**

(57)    Procédé pour la détection d'une fréquence ou une combinaison de fréquences dans un signal (m(n), par traitement du signal au moyen d'un algorithme approprié, et matériel de télécommunications mettant en oeuvre ce procédé. Le procédé prévoit une opération d'estimation de "M" coefficients de filtre permettant de caractériser soumis à détection au moyen de l'algorithme de moyenne quadratique minimale, dit "LMS", et une opération de calcul de la distance euclidienne entre le signal soumis à détection et au moins la fréquence ou la combinaison de fréquences à détecter en utilisant les coefficients de filtre obtenus pour le signal soumis à détection et les coefficients de filtre correspondants qui caractérisent la fréquence ou la combinaison de fréquences à détecter. Cette fréquence ou combinaison de fréquences est considérée comme détectée dans le signal soumis à détection, lorsque la distance euclidienne déterminée par calcul se trouve inférieure à une valeur de seuil déterminée.

FIG. 1

**Description**

L'invention concerne un procédé prévu pour assurer la détection d'une fréquence ou d'une combinaison de fréquences dans un signal où de telles fréquences et/ou combinaisons multifréquences sont susceptibles d'être temporairement incluses, en particulier à des fins de signalisation et/ou de transmission d'informations entre équipements d'un système de télécommunications.

Elle concerne aussi les divers matériels de télécommunications dans lesquels ou par l'intermédiaire desquels ce procédé de détection est susceptible d'être mis en oeuvre.

La transmission d'indications de signalisation ou d'éléments d'information dans un signal sous la forme de fréquences ou de combinaisons de fréquences prédéterminées est une solution mise en oeuvre depuis déjà longtemps dans divers systèmes fonctionnant en temps réel et, en particulier, dans les systèmes de télécommunications. Elle implique qu'un équipement destinataire dispose de moyens lui permettant de détecter la présence d'une fréquence ou d'une combinaison de fréquences caractéristique d'une indication de signalisation ou d'un élément d'information dans un signal qui lui est transmis. Une détection rapide en cas d'apparition d'une fréquence ou d'une combinaison de fréquence recherchée dans un signal soumis à détection est généralement recherchée. Il est par ailleurs avantageux que la détection soit assurée dans une large gamme dynamique de puissance et qu'elle ne soit pas perturbée par l'éventuelle présence dans le signal soumis à détection, soit d'autres fréquences ou combinaisons de fréquences caractéristiques, soit encore de composantes fréquentielles relatives à du bruit ou à des signaux de parole transmis. Comme connu, les fréquences et combinaisons de fréquences caractéristiques, y compris celle recherchée, sont choisies de manière connue de l'homme de métier pour ne pas être susceptibles d'être confondues, d'une part entre elles et, d'autre part, avec les autres signaux susceptibles de figurer dans le signal soumis à détection.

Un procédé connu de détection de la présence d'une fréquence ou d'une combinaison multifréquence déterminée prévoit la mise en oeuvre d'un algorithme de GOERTZEL, lors des opérations effectuées au niveau du signal soumis à détection. Ce procédé est exploité, en particulier, pour assurer la détection des combinaisons caractéristiques de deux fréquences de signalisation multifréquence DTMF (Dual-Tone Multi-Frequency) couramment utilisées dans le domaine des télécommunications. Il permet de déterminer le niveau d'énergie obtenu pour un signal soumis à détection à chacune des fréquences, réparties en deux groupes de quatre, qui sont caractéristiques de ce mode de signalisation et pour en déduire la fréquence, dans chaque groupe, pour laquelle le niveau d'énergie reçue est le plus élevé. La combinaison DTMF transmise est celle qui est définie par les deux fréquences pour chacune desquelles le plus haut niveau d'énergie a été obtenu dans un des groupes. Toutefois, ce procédé a pour inconvénient de ne pas permettre d'obtenir une portée dynamique aussi étendue qu'il peut être souhaité, cette gamme souhaitée s'étendant par exemple de 0 à -40dBm.

L'utilisation d'algorithmes exploitant des filtres centrés sur les fréquences à détecter et analysant l'énergie obtenue à la sortie de ces filtres fait aussi partie des techniques connues. Elle a pour inconvénient de ne pas permettre d'obtenir des temps de réponse aussi rapides que désiré, ce temps désiré étant par exemple de l'ordre de la dizaine de millisecondes.

La mise en oeuvre de procédés paramétriques, qui permettent d'obtenir une analyse spectrale d'un signal soumis à détection et qui utilisent des calculs par inversion de matrice, est aussi une solution envisageable. Toutefois cette solution ne convient pas pour des applications en temps réel.

L'invention propose donc un procédé permettant la détection d'une fréquence ou d'une combinaison de fréquences dans un signal, par traitement du signal soumis à détection, au moyen d'un algorithme approprié.

Selon une caractéristique de l'invention, ce procédé prévoit une opération d'estimation de "M" coefficients de filtre, permettant de caractériser le signal soumis à détection, au moyen de l'algorithme de moyenne quadratique minimale LMS (pour "least mean square"), ainsi qu'une opération de calcul de la distance euclidienne entre le signal soumis à détection et au moins la fréquence ou la combinaison de fréquences à détecter, en utilisant les "M" coefficients de filtre obtenus pour le signal soumis à détection par l'opération d'estimation et "M" coefficients de filtre correspondants déterminés qui caractérisent la fréquence ou la combinaison de fréquences à détecter, cette fréquence ou cette combinaison de fréquences étant considérée comme détectée dans le signal soumis à détection, lorsque la distance euclidienne déterminée par calcul se trouve inférieure à une valeur de seuil déterminée.

Selon une forme de mise en oeuvre du procédé, selon l'invention, la valeur de seuil correspond à la distance euclidienne entre le signal soumis à détection et un signal déterminé qui est normalement inclus dans ce signal soumis à détection, cette distance étant calculée en utilisant les "M" coefficients de filtre obtenus pour le signal soumis à détection par l'opération d'estimation et "M" coefficients de filtre correspondants prédéterminés qui caractérisent ledit signal déterminé.

Selon une forme de mise en oeuvre du procédé, selon l'invention, le signal déterminé pris en compte pour la détermination de la distance euclidienne constituant la valeur de seuil est un signal de bruit blanc.

Selon une autre forme de mise en oeuvre du procédé, selon l'invention, il est prévu de calculer au moins une distance euclidienne supplémentaire entre le signal soumis à détection et un autre signal déterminé susceptible d'être contenu dans ce signal soumis à détection, pour constituer une valeur de seuil supplémentaire à laquelle à laquelle est comparée la distance euclidienne estimée entre le signal soumis à détection et la fréquence ou combinaison de fréquence dont la détection est recherchée.

L'invention concerne aussi les matériels de télécommunications, notamment les équipements de traitement de signalisation téléphonique et/ou radiotéléphonique qui ont pour caractéristique de comporter un processeur de signal programmé pour mettre en oeuvre le procédé de détection défini ci-dessus.

L'invention, ses caractéristiques et ses avantages sont précisés dans la description qui suit en liaison avec les figures évoquées ci-dessous.

La figure 1 présente un schéma de principe relatif à l'algorithme exploité dans le procédé de détection, selon l'invention.

La figure 2 est un diagramme représentatif d'un signal multifréquence, constitué par une combinaison déterminée de deux fréquences, à trois niveaux de puissance, sur lequel le nombre de coefficients pris en compte figure en abscisse, le niveau d'amplitude du signal étant en ordonnée.

La figure 3 est un diagramme représentant deux signaux multifréquences différents, comprenant la combinaison de deux fréquences considérée en figure 1 et une seconde combinaison de deux fréquences, dans les mêmes conditions que pour la figure 1.

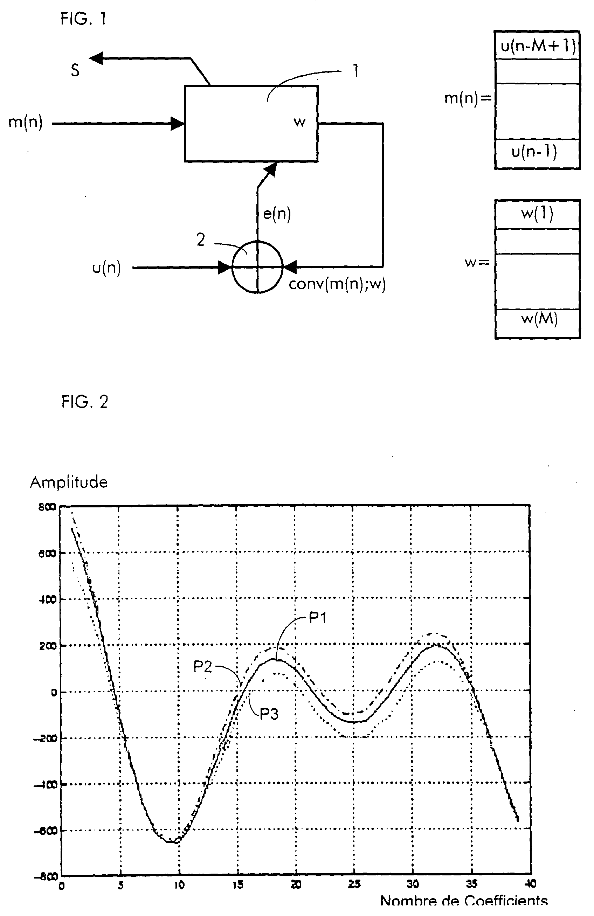

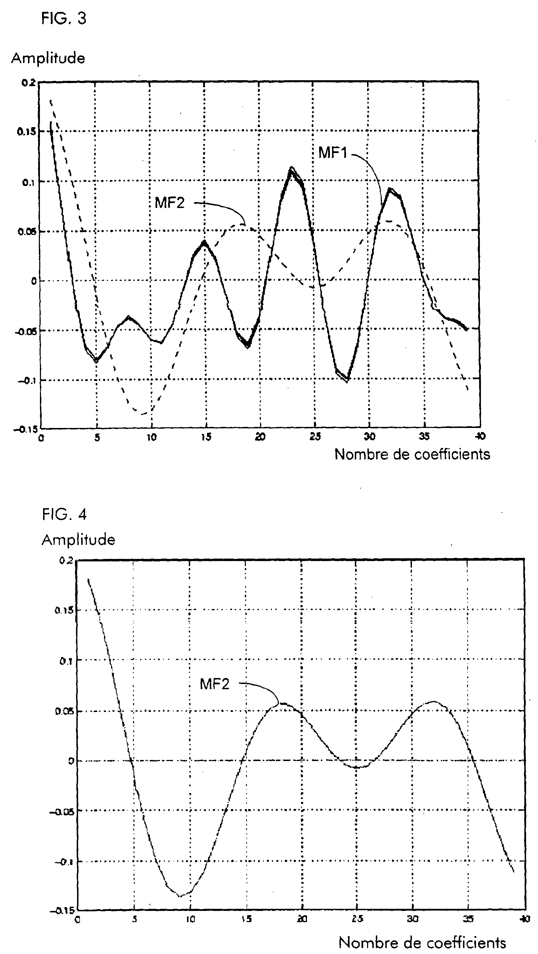

La figure 3 est un diagramme où le signal considéré multifréquence illustré en figure 1 est supposé accompagné de bruit blanc.

Le procédé de détection d'une fréquence ou d'une combinaison de fréquences, selon l'invention, est destiné, en particulier, à être mis en oeuvre dans le domaine des télécommunications où des signaux composés de cette manière sont exploités à des fins de signalisation de type téléphonique ou radiotéléphonique ou de transmission d'informations. Ces signaux mono ou multifréquences sont pris en compte par des équipements de traitement incorporés dans divers matériels de télécommunications fonctionnant en temps réel, notamment au niveau des centres qui constituent les différents noeuds des réseaux de télécommunications. Dans ce genre d'exploitation, la recherche effectuée, en vue de la détection d'une fréquence ou d'une combinaison de fréquences déterminée dans un signal, est réalisée sur un signal susceptible d'être exploité pour transmettre successivement et/ou simultanément et en particulier sous forme numérique, de la parole, des données, des signalisations, du bruit. La recherche s'effectue alors de manière généralement périodique au niveau du spectre du signal soumis à détection et elle conduit à une estimation de ce signal. Cette estimation est par exemple effectuée en prenant en considération un nombre de coefficients de filtre qui est choisi en fonction des besoins.

Selon l'invention, il est prévu d'obtenir une détection rapide de l'apparition d'une fréquence ou d'une combinaison de fréquences déterminée dans un signal, soumis à détection, supposé transmis dans le cadre d'une application fonctionnant en temps réel, en traitant le signal au moyen d'un processeur de signal programmé de manière à permettre l'exploitation d'un algorithme LMS de calcul de moyennes quadratiques minimales pour effectuer une estimation de coefficients de filtre par lesquels le spectre du signal est définissable.

La première opération réalisée, en application du procédé selon l'invention, sur le signal, soumis à détection, est donc une estimation de chacun des M coefficients de filtre $w_i$ par l'intermédiaire desquels le spectre de ce signal peut être défini. Le nombre M est un nombre entier, positif, choisi de manière connue en soi pour permettre d'obtenir une précision spectrale déterminée, dans les exemples illustrés sur les figures ci-jointes, un nombre M de coefficients égal à 39 a ainsi été retenu.

L'estimation est fondée sur l'exploitation des équations LMS définies ci-dessous.

$$\hat{\underline{w}}(n+1) = \hat{\underline{w}}(n) + \mu \cdot \underline{u}(n) \cdot e(n) \text{ et}$$

$$e\left(n\right) = u\left(n\right) - \sum_{k=1}^{M} \hat{w}_k\left(n\right) \cdot u\left(n-k\right) \text{ où}$$

- $\hat{\underline{w}}(n)$ est l'estimation des coefficients de filtre au temps n, taille Mx1 ;
- $\underline{u}(n)$ est le vecteur de données, taille Mx1 ;
- $e(n)$ est une erreur d'estimation égale à $e(n)=u(n)-\hat{u}(n)$, taille 1x1 ;
- $\mu$ est le pas algorithmique.

En admettant une puissance comprise entre +3 et -40 DBm pour le signal soumis à détection, il est possible d'exploiter l'algorithme normalisé LMS qui permet de calculer le paramètre de pas algorithmique $\mu$ par l'intermédiaire de l'équation ci-dessous :

$$\mu = \frac{\widetilde{\mu}}{\left\|\underline{u}(n)\right\|^2}$$

La convergence de l'algorithme peut être obtenue en 10 millisecondes, pour une valeur de égale à 0,2.

La figure 1 est une illustration simplifiée de l'algorithme LMS mis en oeuvre pour la détection, dans laquelle m(n) est le signal soumis à détection qui est supposé appliqué en entrée d'un filtre prédictif 1. Ce signal d'entrée m(n) se définit par un ensemble de vecteurs de données u(n-M+1) à u(n-1), schématisé sur la figure 1, à partir desquels est calculée l'erreur d'estimation e(n), via un opérateur 2. A cet effet, cet opérateur possède une entrée d'échantillon recevant u(n) et une entrée recevant conv(m(n);w) qui lui est fourni par le filtre prédiction 1, w correspond à un ensemble de M coefficients w(1) à w(M), dans l'exemple illustré ici.

Le bouclage de la sortie de l'opérateur 2 sur une entrée du filtre prédictif 1 est exploité pour fournir l'erreur d'estimation calculée, définie par e(n), à ce filtre. Cet erreur combinée au signal d'entrée, défini par m(n), est exploitée pour obtenir le spectre du signal d'entrée qui est ici supposé fourni au niveau d'une sortie S du filtre.

L'adaptabilité du filtre aux variations du signal d'entrée est fonction de la périodicité d'échantillonnage et, dans une forme préférée de réalisation, il est prévu de réinitialiser les coefficients estimés $w_i$ toutes les dix millisecondes.

L'utilisation des trois équations définies ci-dessus pour calculer le pas algorithmique $\mu$, les erreurs d'estimation e(n) et les coefficients de filtre $\underline{w}(n)$ permet de déterminer chacun des M coefficients de filtre correspondant à ceux qui ont été retenus pour une fréquence ou une combinaison de fréquences déterminée à détecter dans le signal soumis à détection.

Dans l'exemple de réalisation proposé, il est donc obtenu une série de M=39 coefficients de filtre, toutes les dix millisecondes, à partir du signal soumis à détection.

Le niveau de puissance du signal soumis à détection n'a pratiquement que peu d'influence sur le niveau obtenu pour les divers coefficients de filtre, comme l'illustre la figure 2 qui correspond à des relevés de mesure effectués pour un même signal multifréquence de fréquences f1 et f2, ici par exemple de 350 et 440 Hz, pour trois niveaux P1, P2 et P3 de signal soumis à détection.

Dans l'exemple considéré, les niveaux de puissance P1, P2 et P3 sont respectivement de -15 dBm, -5 dBm et -40 dBm et les variations correspondantes d'amplitude pour chacun des trente neuf coefficients calculés ne sont pas significatives, comme le montre clairement le diagramme de relevés pour les trois courbes représentées.

La détermination des coefficients permet d'obtenir une détection sélective d'une fréquence ou d'une combinaison multifréquence, comme l'illustre la figure 3 où sont représentés les valeurs des coefficients de filtre obtenus pour deux signaux multifréquences proches respectivement représentés par les courbes MF1 et MF2. Dans l'exemple proposé le signal MF1 est un signal correspondant à une combinaison de deux fréquences f1 et f2, telle qu'envisagée ci-dessus, ces fréquences étant respectivement de 350 et 440 Hz. Le signal MF2 est un signal correspondant à une combinaison de deux fréquences f1' et f2' qui sont respectivement de 700 et 1000 Hz.

Selon l'invention, la détermination de la présence d'un signal mono ou multifréquence à détecter, dans un signal entrant, est assurée par un processus décisionnaire dont le fondement est une opération de calcul de la distance euclidienne existant entre le signal soumis à détection, à un instant donné, et le signal mono ou multifréquence à détecter.

La distance euclidienne $d_1$(n) calculée pour un signal soumis à détection et un signal constitué d'une fréquence ou d'une combinaison de fréquences déterminée, en prenant en compte M coefficients de filtre, est classiquement obtenue à partir de l'équation :

$$d_1(n) = d\left(\underline{w}(n);\underline{w}_1\right) = \sum_{i=1}^{M}\left|w_n(i) - w_1(i)\right|^2$$

Elle est comparée à une valeur de seuil prédéterminée $d_0$ choisie pour permettre de considérer que la fréquence ou combinaison de fréquences déterminée, qui est recherchée, a été détectée si la valeur de $d_1$ est inférieure à la valeur de $d_0$.

Dans une forme préférée de réalisation, la valeur de seuil choisie est établie en prenant en compte les coefficients théoriques de bruit blanc.

A cet effet, deux distances euclidiennes sont calculées, l'une entre le signal soumis à détection et le signal mono ou multifréquence à détecter, comme précédemment, et l'autre entre ce signal soumis à détection et le signal de bruit blanc. Deux séries de coefficients correspondant respectivement aux coefficients de filtre $w_1$ prédéterminés pour le signal mono ou multifréquence à détecter et une autre aux coefficients de filtre $w_0$ prédéterminés pour le signal de bruit blanc.

Dans l'exemple présenté en figure 4, un signal multifréquence MF2, tel qu'envisagé sur les figures 2, 3, est illustré et le diagramme donne l'amplitude des 39 coefficients prédéterminés de filtre $w_1$ qui sont caractéristiques de ce signal. Le signal de bruit blanc se traduit à cet échelle par une courbe d'allure horizontale dont le niveau est faible et se confond pratiquement avec l'axe des abscisses du diagramme.

Deux distances euclidiennes $d_1$ et $d_0$ sont calculées en prenant en compte les coefficients estimés de filtre $w_n$ pour le signal soumis à détection et chacune des deux séries de coefficients de filtre déterminés $w_1$ pour la fréquence ou combinaison de fréquences à détecter et $w_0$ pour le bruit blanc, elles se traduisent par des équations suivantes :

$$d_1(n) = d\left(\underline{w}(n); \underline{w}_1\right) = \sum_{i=1}^{M} \left|w_n(i) - w_1(i)\right|^2$$

$$d_0(n) = d\left(\underline{w}(n); w_0\right) = \sum_{i=1}^{M} \left|w_n(i) - w_0(i)\right|^2 = \sum_{i=1}^{M} \left|w_n(i)\right|^2$$

Chacune des deux distances euclidiennes calculées donne une estimation d'erreur en relation avec chacune des deux références choisies. Si la valeur de $d_0$ est plus grande que la valeur de $d_1$, la fréquence ou combinaison de fréquences à détecter est considérée comme présente dans le signal soumis à détection qui a été traité.

Il est bien entendu envisageable de prendre en compte d'autres signaux de référence que le signal de bruit blanc, soit en s'y substituant soit en s'y additionnant, avec dans chaque cas un calcul de distance euclidienne vis-à-vis de chaque signal de référence pris en compte.

Le procédé selon l'invention est plus particulièrement prévu pour être exploité dans des matériels de télécommunications et en particulier dans des équipements où il est destiné à permettre la détection de signaux multifréquences produits en réponse à l'actionnement de touches de clavier. Il est aussi prévu de le mettre en oeuvre dans des équipements à des fins de détection de tonalités caractéristiques d'étapes spécifiques atteintes au cours de la progression d'appels, telles que les tonalités de retour d'appel, d'occupation, d'indisponibilité et autres.

## Revendications

**1.** Procédé pour la détection d'une fréquence ou une combinaison de fréquences dans un signal "m(n)", par traitement du signal au moyen d'un algorithme approprié, **caractérisé en ce qu'**il prévoit une opération d'estimation de "M" coefficients de filtre, permettant de **caractériser** le signal "m(n)" soumis à détection, au moyen de l'algorithme de moyenne quadratique minimale (LMS), ainsi qu'une opération de calcul de la distance euclidienne " $d_1$"entre le signal soumis à détection et au moins la fréquence ou la combinaison de fréquences à détecter, en utilisant les "M" coefficients de filtre obtenus pour le signal soumis à détection par l'opération d'estimation, et "M" coefficients de filtre correspondants déterminés qui **caractérisent** la fréquence ou la combinaison de fréquences à détecter, cette fréquence ou cette combinaison de fréquences étant considérée comme détectée dans le signal soumis à détection, lorsque la distance euclidienne "$d_1$" déterminée par calcul se trouve inférieure à une valeur de seuil "$d_0$" déterminée.

**2.** Procédé selon la revendication 1, dans lequel la valeur de seuil "$d_0$" correspond à la distance euclidienne entre le signal soumis à détection et un signal déterminé qui est normalement inclus dans ce signal soumis à détection, cette distance étant calculée en utilisant les "M" coefficients de filtre obtenus pour le signal soumis à détection par l'opération d'estimation, et "M" coefficients de filtre correspondants prédéterminés qui **caractérisent** ledit signal déterminé.

**3.** Procédé selon la revendication 2, dans lequel le signal déterminé pris en compte pour la détermination de la distance euclidienne constituant la valeur de seuil "$d_0$" est un signal de bruit blanc.

**4.** Procédé selon l'une des revendications 1 à 3, dans lequel il est prévu de calculer au moins une distance euclidienne supplémentaire entre le signal soumis à détection et un autre signal déterminé susceptible d'être contenu dans ce signal soumis à détection, pour constituer une valeur de seuil supplémentaire à laquelle à laquelle est comparée la distance euclidienne estimée entre le signal soumis à détection et la fréquence ou combinaison de fréquence dont la détection est recherchée.

**5.** Matériel de télécommunications, notamment équipement de traitement de signalisation téléphonique et/ou radiotéléphonique, **caractérisé en ce qu'**il comporte un processeur de signal programmé pour :

- estimer "M" coefficients de filtre, permettant de **caractériser** le signal "m(n)" soumis à détection, au moyen de l'algorithme de moyenne quadratique minimale (LMS),
- calculer la distance euclidienne " $d_1$"entre le signal soumis à détection et au moins la fréquence ou la combinaison de fréquences à détecter, en utilisant les "M" coefficients de filtre obtenus pour le signal soumis à détection par l'opération d'estimation, et "M" coefficients de filtre correspondants déterminés qui **caractérisent** la fréquence ou la combinaison de fréquences à détecter,
- et fournir un signal indiquant que cette fréquence ou cette combinaison de fréquences est détectée dans le signal soumis à détection, lorsque la distance euclidienne "$d_1$" déterminée par calcul est inférieure à une valeur de seuil "$d_0$" déterminée.

FIG. 1

$$m(n) = \begin{array}{|c|} \hline u(n-M+1) \\ \hline \\ \hline u(n-1) \\ \hline \end{array}$$

$$w = \begin{array}{|c|} \hline w(1) \\ \hline \\ \hline w(M) \\ \hline \end{array}$$

FIG. 2

Amplitude

Nombre de Coefficients

FIG. 3

Amplitude

Nombre de coefficients

FIG. 4

Amplitude

Nombre de coefficients

**Office européen des brevets**

**RAPPORT DE RECHERCHE EUROPEENNE**

Numéro de la demande

EP 01 40 1418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 136 531 A (MCCASLIN SHAWN) 4 août 1992 (1992-08-04) * le document en entier * | 1-5 | H04Q1/46 |
| A | EP 0 622 962 A (IBM) 2 novembre 1994 (1994-11-02) * abrégé * | 1-5 | |
| A | US 5 889 851 A (HSIEH SHWU-LIANG LUKE) 30 mars 1999 (1999-03-30) * abrégé * | 1-5 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| LA HAYE | 15 octobre 2001 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPÉENNE
## RELATIF A LA DEMANDE DE BREVET EUROPEEN NO.

EP 01 40 1418

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

15-10-2001

| Document brevet cité au rapport de recherche | | Date de publication | Membre(s) de la famille de brevet(s) | | Date de publication |
|---|---|---|---|---|---|
| US 5136531 | A | 04-08-1992 | AUCUN | | |
| EP 0622962 | A | 02-11-1994 | EP | 0622962 A1 | 02-11-1994 |
| | | | CA | 2112767 A1 | 30-10-1994 |
| | | | DE | 69328356 D1 | 18-05-2000 |
| | | | DE | 69328356 T2 | 19-10-2000 |
| | | | JP | 2728232 B2 | 18-03-1998 |
| | | | JP | 6315172 A | 08-11-1994 |
| | | | US | 5495526 A | 27-02-1996 |
| US 5889851 | A | 30-03-1999 | AUCUN | | |

EPO FORM P0460

Pour tout renseignement concernant cette annexe : voir Journal Officiel de l'Office européen des brevets, No.12/82